# EUROPÄISCHE PATENTSCHRIFT

(11) **EP 2 278 783 B1**
(45) Veröffentlichungstag und Bekanntmachung des Hinweises auf die Patenterteilung: **06.12.2017**
(21) Anmeldenummer: 10165505.8
(22) Anmeldetag: 10.06.2010
(51) Int. Cl.: H04M 3/436, H04M 1/663, H04N 21/466

(54) **Vorrichtung und Verfahren zum Erkennen von erwünschten und/oder unerwünschten Telefonanrufen in Abhängigkeit des Nutzerverhaltens eines Nutzers eines Telefons**
Device and method for recognising desired and/or undesired telephone calls depending on the usage habits of a telephone user
Dispositif et procédé de reconnaissance d'appels téléphoniques souhaités et/ou non souhaités en fonction du comportement d'un utilisateur de téléphone

(30) Priorität: 26.06.2009 DE 102009030699
(43) Veröffentlichungstag der Anmeldung: 26.01.2011
(73) Patentinhaber: Vodafone GmbH, 40549 Düsseldorf (DE)
(72) Erfinder: Holtel, Stefan, 82008, Unterhaching (DE); Fischer, Matthias, 80636, München (DE)
(74) Vertreter: Müller & Schubert

(56) Entgegenhaltungen:
- WO-A1-2009/063262
- WO-A2-2006/107396
- US-A1- 2002 144 259
- SAKKIS G: "A memory-based approach to anti-spam filtering for mailing lists", INFORMATION RETRIEVAL KLUWER ACADEMIC PUBLISHERS USA, Bd. 6, Nr. 1, Januar 2003 (2003-01), Seiten 49-73, XP002610221, ISSN: 1386-4564

## Beschreibung

Die vorliegende Erfindung betrifft zunächst eine Vorrichtung zum Erkennen von erwünschten und/oder unerwünschten Telefonanrufen in Abhängigkeit des Nutzerverhaltens eines Nutzers eines Telefons. Weiterhin betrifft die vorliegende Erfindung ein Verfahren zum Erstellen eines Nutzerprofils zum Erkennen von erwünschten und/oder unerwünschten Telefonanrufen in Abhängigkeit des Nutzerverhaltens eines Nutzers eines Telefons, mittels einer Vorrichtung, die eine Schnittstelle zu wenigstens einem Telefon des Nutzers und eine Schnittstelle zu wenigstens einem medialen Endgerät, insbesondere einem Rundfunkgerät oder Fernsehgerät, aufweist. Schließlich betrifft die Erfindung auch ein Verfahren zum Erkennen von erwünschten und/oder unerwünschten Telefonanrufen in Abhängigkeit des Nutzerverhaltens eines Nutzers eines Telefons mittels einer Vorrichtung, die eine Schnittstelle zu wenigstens einem Telefon des Nutzers und eine Schnittstelle zu wenigstens einem medialen Endgerät, insbesondere einem Rundfunkgerät oder Fernsehgerät, aufweist.

Oftmals tritt die Situation auf, dass der Nutzer eines Telefons durch einen eingehenden Telefonanruf gestört wird, während einer anderen Tätigkeit nachgeht, beispielsweise, während er eine Fernsehsendung ansieht, eine Radiosendung hört, im Internet surft, oder dergleichen. Dies führt auf Seiten des Nutzers nicht selten zu einer Frustration, da er seinen Fokus auf den eingehenden Anruf richten muss und sich nicht mehr auf die von ihm bis dahin durchgeführte Tätigkeit konzentrieren kann. Auch für den Anrufer sind solche Situationen oft unerfreulich, da der Anrufer ursprünglich nicht weiß, dass er mit seinem Anruf den Angerufenen bei einer anderen Tätigkeit stört oder unterbricht.

Aus diesem Grund besteht das Bedürfnis, eine Möglichkeit zu schaffen, durch die der Nutzer des Telefons durch eingehende, in diesem Moment jedoch unerwünschte, Telefonanrufe gestört wird.

Im Stand der Technik sind bereits verschiedene Möglichkeiten bekannt, wie das Blockieren unerwünschter eingehender Anrufe unterbunden werden kann. Beispielsweise ist in DE 10 2006 023 924 A1 ein Verfahren zur Identifizierung von unerwünschten Telefonanrufen beschrieben. Dabei werden die eingehenden Anrufe einem Test unterzogen, wobei zum einen der Zeitpunkt des eingehenden Anrufs bestimmt wird. Weiterhin wird die Wahrscheinlichkeit ermittelt, dass es sich um einen unerwünschten Anruf handelt. Dabei werden auch vorausgegangene unerwünschte Anrufe mit einbezogen. In der DE 102006 027 386 A1 ist eine ähnliche Lösung beschrieben, bei der eingehende Anrufe in eine von drei Listen einkategorisiert werden. In WO 2006/107396 A2 wird eine Vorrichtung offenbart, die eine Schnittstelle zu einem Telefon und zu einem medialen Endgerät aufweist und es ermöglicht, eingehende Anrufe mittels des medialen Endgeräts anzunehmen oder abzulehnen bzw. zukünftige Anrufe von der gleichen Rufnummer zu blockieren. Ausgehend vom genannten Stand der Technik liegt der vorliegenden Erfindung die Aufgabe zugrunde, eine Vorrichtung sowie ein Verfahren der eingangs genannten Art derart weiterzubilden, dass auf einfache Weise eingehende Anrufe, die den Nutzer eines Telefons bei einer von diesem gerade ausgeführten Tätigkeit stören würden, von diesem - zumindest während der Ausübung seiner Tätigkeit - ferngehalten werden können.

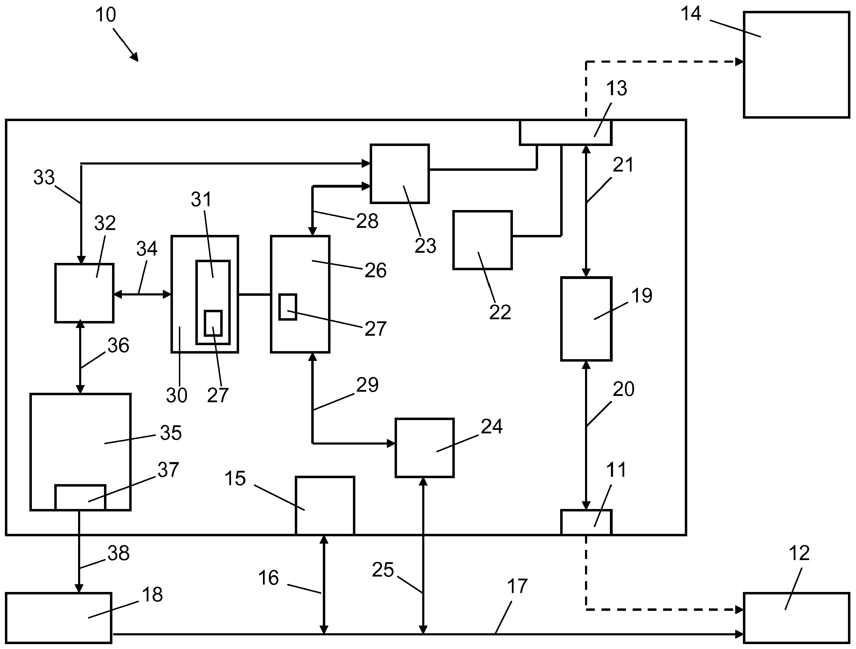

Diese Aufgabe wird erfindungsgemäß gelöst durch die Vorrichtung mit den Merkmalen gemäß dem unabhängigen Patentanspruch und das Verfahren mit den Merkmalen gemäß dem unabhängigen Patentanspruch 8. Weitere Merkmale und Details der Erfindung ergeben sich aus den Unteransprüchen, der Beschreibung sowie der Zeichnung. Dabei gelten Merkmale und Details, die im Zusammenhang mit einem der beiden Verfahrensaspekte beschrieben sind, selbstverständlich vollumfänglich auch im Zusammenhang mit dem jeweils anderen Verfahrensaspekt, und umgekehrt. Ebenso gelten Merkmale und Details, die im Zusammenhang mit der erfindungsgemäßen Vorrichtung beschrieben sind, selbstverständlich vollumfänglich auch im Zusammenhang mit den erfindungsgemäßen Verfahren, und umgekehrt.

Die vorliegende Erfindung in ihren verschiedenen Erfindungsaspekten stellt eine Lösung bereit, bei der ein bestimmter Kontext ermittelt wird, beispielsweise ein medialer Inhalt, und bei der weiterhin festgestellt wird, ob der Nutzer des Telefons während dieses Kontextes durch einen eingehenden Anruf gestört werden will.

Dabei handelt es sich um ein selbstlernendes System, das mit jedem weiteren eingehenden Anruf automatisch dazulernt und weitergebildet wird. Wie dies im Einzelnen geschieht, wird im weiteren Verlauf der Beschreibung noch näher erläutert.

Wenn ein Anruf bei dem Nutzer des Telefons eingeht, hat der Nutzer des Telefons zwei Möglichkeiten. Entweder er nimmt den Anruf an, oder aber er lehnt diesen ab. Beides wird von der Vorrichtung registriert und erkannt. Weiterhin erschließt die Vorrichtung den oben erwähnten Kontext, beispielsweise einen medialen Inhalt. Hierzu wird vorteilhaft eine Inhaltsanalyse vorgenommen, wie im weiteren Verlauf der Beschreibung noch in größerem Detail erläutert wird.

Mit der erfindungsgemäßen Lösung kann insbesondere erreicht werden, dass auf dem Telefon eines Nutzers eingehende unerwünschte Telefonanrufe abgeblockt werden, während dieser einer bestimmten Tätigkeit nachgeht, beispielsweise, während dieser ein bestimmtes Fernsehprogramm anschaut.

Die vorliegende Erfindung stellt somit eine intelligente Verbindung zwischen einer bestimmten Tätigkeit, beispielsweise der Ausstrahlung eines bestimmten Fernsehprogramms und einem Telefon des Nutzers, beispielsweise einem Mobiltelefon, dar um für den Nutzer den Komfort seiner Tätigkeit dahingehend zu erhöhen, dass er während dieser nicht durch unerwünschte Telefonanrufe gestört wird und/oder dass dieser entscheiden kann, ob er einen eingehenden Telefonanruf annehmen möchte oder nicht.

Die vorliegende Erfindung generiert somit Möglichkeiten, um unerwünschte eingehende Anrufe auf einem Telefon zu blockieren beziehungsweise umzuleiten, zum Beispiel auf einen späteren Zeitpunkt.

Der technische Grundablauf des Verfahrens ist derart, dass in der Vorrichtung ein Profil des Nutzers angelegt ist, das aus vorangegangenen Tätigkeiten des Nutzers entsteht, beispielsweise hinsichtlich der Blockierung/Umleitung von eingehenden Anrufen. Wenn dann später entsprechende Tätigkeiten erkannt werden, wird ein eingehender Anruf auf der Basis dieser Erkenntnisse blockiert/umgeleitet. Darüber hinaus kann der Nutzer bestimmte Telefonnummern vorgeben, bei denen keine derartige Blockierung/Umleitung erfolgt.

Bei dem technischen Grundverfahren handelt es sich folglich um eine Art Filtersystem, mittels dessen bei bestimmten Voraussetzungen bestimmte eingehende Telefonanrufe blockiert/umgeleitet werden.

Dieses technische Verfahren wird gemäß der vorliegenden Erfindung vorteilhaft im Zusammenhang mit einem bevorzugten Ausführungsbeispiel durchgeführt. Natürlich ist die Erfindung dabei nicht auf dieses eine bevorzugte Ausführungsbeispiel beschränkt. Bei diesem Ausführungsbeispiel wird das Profil des Nutzers anhand von dessen Fernsehkonsumprioritäten festgelegt. Das vom Nutzer angeschaute Fernsehprogramm wird analysiert, beispielsweise indem ein so genannter elektronischer Programmführer (EPG - Electronic Program Guide) überprüft wird. Das Profil wird dann in einer Weise erstellt, indem von der Vorrichtung geprüft wird, wann eingehende Anrufe vom Nutzer geblockt werden und was für ein Programm gerade im Fernsehen läuft. Dies geschieht beispielsweise durch entsprechende Analyse des Electronic Program Guide. Wenn dann später ein entsprechendes Programm läuft, werden eingehende Anrufe vom System gleich blockiert/umgeleitet, sofern es sich nicht um ausgenommene Rufnummern handelt.

Wie die Wirkungen der erfindungsgemäßen Lösung erzielt werden können, wird nachfolgend in größerem Detail beschrieben.

Gemäß dem ersten Aspekt der Erfindung wird eine Vorrichtung zum Erkennen von erwünschten und/oder unerwünschten Telefonanrufen in Abhängigkeit des Nutzerverhaltens eines Nutzers eines Telefons, bereitgestellt, die folgende Merkmale aufweist:
eine Schnittstelle zu wenigstens einem Telefon des Nutzers;
eine Schnittstelle zu wenigstens einem medialen Endgerät, insbesondere einem Rundfunkgerät oder Fernsehgerät;
eine Einrichtung zum Feststellen des Eingangs eines Telefonanrufs auf dem Telefon des Nutzers;
eine Überprüfungseinrichtung zur Feststellung eines räumlichen Bezugs zwischen dem Telefon des Nutzers und dem medialen Endgerät;
eine Einrichtung zum Erfassen des Aktivierungszustands des medialen Endgeräts;
eine Einrichtung zum Erschließen eines auf dem medialen Endgerät bereitgestellten medialen Inhalts zum Zeitpunkt des Eingangs eines Telefonanrufs auf dem Telefon des Nutzers;
eine Einrichtung zur Feststellung des Nutzerverhaltens dahingehend, ob während der Bereitstellung des medialen Inhalts ein auf dem Telefon eingehender Anruf vom Nutzer angenommen oder abgelehnt wird;
eine Einrichtung zum Verknüpfen des medialen Inhalts und des Nutzerverhaltens bezüglich der Annahme oder Ablehnung des eingehenden Telefonanrufs zu einer Ereignisdatei;
eine Speichereinrichtung zum Abspeichern der Ereignisdatei zur Erstellung eines Nutzerprofils;
eine Vergleichseinrichtung zum Vergleichen des medialen Inhalts während eines eingehenden Anrufs auf dem Telefon des Nutzers mit medialen Inhalten von in der Speichereinrichtung abgespeicherten Ereignisdateien des Nutzerprofils;
eine Einrichtung zum Feststellen, ob es sich resultierend aus dem Vergleich um einen erwünschten oder unerwünschten Anruf handelt.

Die erfindungsgemäße Vorrichtung dient zum Erkennen von erwünschten und/oder unerwünschten Telefonanrufen in Abhängigkeit des Nutzerverhaltens eines Nutzers eines Telefons. Bei einem erwünschten Telefonanruf handelt es sich beispielsweise um einen solchen, den der Nutzer annehmen möchte. Bei einem unerwünschten Telefonanruf handelt es sich beispielsweise um einen solchen, den ein Nutzer zu einem bestimmten Zeitpunkt, beispielsweise wenn er eine bestimmte Fernsehsendung oder einen bestimmten Typ von Fernsehsendungen ansieht, zeitweilig nicht annehmen möchte.

Es geht somit nicht darum, grundsätzlich unerwünschte Anrufe, so genannte Spam-Anrufe, generell zu blocken. Vielmehr geht es darum, zu bestimmten Zeiten, in denen der Nutzer einer bestimmten Tätigkeit nachgeht, beispielsweise während derer er eine bestimmte Fernsehsendung ansieht, bestimmte eingehende Anrufe zu unterbinden. Bei diesen bestimmten Tätigkeiten handelt es sich um das Nutzerverhalten des Nutzers.

Der Nutzer ist nicht auf die Nutzung bestimmter Telefontypen beschränkt. Beispielsweise kann dieser drahtgebundene oder drahtlose Telefone benutzen. In vorteilhafter Ausgestaltung dient die Vorrichtung zum Blockieren unerwünschter Telefonanrufe auf einem Mobiltelefon eines Nutzers, während dieser ein bestimmtes Fernsehprogramm oder einen bestimmten Typ von Fernsehprogramm ansieht.

Die Vorrichtung weist zunächst eine Schnittstelle zu wenigstens einem Telefon des Nutzers auf.

Weiterhin weist die Vorrichtung auch eine Schnittstelle zu wenigstens einem medialen Endgerät auf. Bei einem medialen Endgerät handelt es sich generell um ein solches Endgerät, mittels dessen einem Nutzer mediale Inhalte verfügbar gemacht werden können. Vorteilhaft kann es sich bei dem medialen Endgerät um ein Fernsehgerät handeln, über welches mediale Inhalte in Form von Fernsehprogrammen, die bevorzugt via Kabel oder Broadcast übertragen werden, bereitgestellt werden. In ähnlicher Weise kann das mediale Endgerät als Rundfunkempfangsgerät, als Computer mit Internetzugang oder dergleichen ausgebildet sein.

Darüber hinaus weist die Vorrichtung vorteilhaft auch eine Schnittstelle zu wenigstens einem Telefon eines Anrufers auf, der den nutzer des Telfons anruft oder anrufen möchte.

Je nach Ausgestaltung kann die Vorrichtung als separate Einrichtung vorgesehen sein, die dann mit dem medialen Endgerät, dem Telefon des Nutzers und dem Telefon des Anrufers kommunizieren können muss. Vorteilhaft kann auch vorgesehen sein, dass die Vorrichtung in dem Telefon, insbesondere einem Mobiltelefon, des Nutzers, oder in einem medialen Endgerät, insbesondere einem Fernsehgerät oder Rundfunkgerät, vorgesehen ist.

Die erfindungsgemäße Vorrichtung verfügt über eine Einrichtung zum Feststellen des Eingangs eines Telefonanrufs auf dem Telefon des Nutzers. Bei einem eingehenden Telefonanruf handelt es sich um einen solchen Telefonanruf, der für den Nutzer des Telfons, der gerade einer bestimmten Tätigkeit nachgeht, beispielsweise indem er eine bestimmte Fernsehsendung ansieht, bestimmt ist, und der von dem nutzer dann akzeptiert oder abgelehnt wird. Derartige eingehende Telefonanrufe sind üblicherweise durch eine einzigartige, das Telefon eines Anrufers identifizierende Telefonnummer spezifiziert.

Des Weiteren verfügt die Vorrichtung auch über eine Überprüfungseinrichtung zur Feststellung eines räumlichen Bezugs zwischen dem Telefon des Nutzers und dem medialen Endgerät. Hierdurch wird sichergestellt, dass die erfindungsgemäße Vorrichtung sowie die weiter unten beschriebenen erfindungsgemäßen Verfahren nur aktiviert werden, wenn sich das Telefon des Nutzers, und damit der Nutzer selbst, in einem solchen Abstand zum medialen Endgerät befinden, dass davon ausgegangen werden kann, dass der Nutzer das Gerät auch gerade tatsächlich benutzt.

Weiterhin ist eine Einrichtung zum Erfassen des Aktivierungszustands des medialen Endgeräts. Darüber wird festgestellt, ob das mediale Endgerät auch tatsächlich in Betrieb ist.

Ist dies der Fall, wird über eine Einrichtung ein auf dem medialen Endgerät bereitgestellter medialer Inhalt zum Zeitpunkt des Eingangs eines Telefonanrufs auf dem Telefon des Nutzers erschlossen. Bei dem medialen Inhalt handelt es sich beispielsweise um den Inhalt einer Fernsehsendung, einer Radiosendung, einer aufgerufenen Internetseite, oder dergleichen. Je nach Ausgestaltung kann auch vorgesehen sein, dass es sich bei dem medialen Inhalt um einen bestimmten Titel, eine Inhaltsgattung oder dergleichen handelt.

Dies soll anhand eines konkreten, nicht ausschließlichen Beispiels verdeutlicht werden. Beispielsweise kann es sich bei dem medialen Inhalt um eine bestimmte, im Fernsehen ausgestrahlte Nachrichtensendung handeln. Beispielsweise ist denkbar, dass es sich bei dem medialen Inhalt um den Titel der Nachrichtensendung handelt, oder aber um die Thematik der Fernsehsendung, hier "Nachrichtensendung" oder dergleichen handelt. Mediale Inhalte können somit auch durch bestimmte Titel von Sendungen, Themen von Sendungen und dergleichen gebildet werden.

Weiterhin verfügt die erfindungsgemäße Vorrichtung über eine Einrichtung zur Feststellung des Nutzerverhaltens dahingehend, ob während der Bereitstellung des medialen Inhalts ein auf dem Telefon eingehender Anruf vom Nutzer angenommen oder abgelehnt wird.

Diese Information, nämlich Nutzerverhalten in Form von Annehmen oder Ablehnen eines Anrufs während der Bereitstellung eines bestimmten medialen Inhalts, wird in einer Einrichtung zum Verknüpfen des medialen Inhalts und des Nutzerverhaltens bezüglich der Annahme oder Ablehnung des eingehenden Telefonanrufs zu einer Ereignisdatei verknüpft. Die Ereignisdatei stellt somit eine Information zur Verfügung, ob ein Nutzer, während ein bestimmter medialer Inhalt über das mediale Endgerät bereitgestellt wird, bestimmte eingehende Telefonanrufe annimmt oder ablehnt.

Die auf diese Weise gewonnenen Ereignisdateien werden in einer Speichereinrichtung zum Abspeichern der Ereignisdatei zur Erstellung eines Nutzerprofils abgespeichert.

Des Weiteren verfügt die Vorrichtung über eine Vergleichseinrichtung zum Vergleichen des medialen Inhalts während eines eingehenden Anrufs auf dem Telefon des Nutzers mit medialen Inhalten von in der Speichereinrichtung abgespeicherten Ereignisdateien des Nutzerprofils. Damit kann in der Vorrichtung überprüft werden, inwieweit sich bestimmte Verhaltensmuster des Nutzers bei bestimmten medialen Inhalten über die Zeit ergeben. Es entsteht ein Nutzerprofil in Form eines Musters, welches das Interesse eines Nutzers widerspiegelt, bei bestimmten über das mediale Endgerät bereitgestellten medialen Inhalten ankommende Anrufe auf seinem Telefon anzunehmen oder abzulehnen.

Schließlich verfügt die Vorrichtung auch über eine Einrichtung zum Feststellen, ob es sich resultierend aus dem Vergleich um einen erwünschten oder unerwünschten Anruf handelt. Die Vorrichtung kann dann in geeigneter Weise gegenüber dem Anrufer in Aktion treten, wie im weiteren Verlauf noch näher erläutert wird.

Wenn in einem solchen Fall ein Anruf für den Nutzer eingeht, wird von der Vorrichtung zunächst geprüft, ob das mediale Endgerät eingeschaltet ist und ob sich das Telfon des Nutzers in einem räumlichen Bezug zu dem medialen Endgerät befindet. Ist dies der Fall wird darauf geschlossen, dass sich der Nutzer mit seinem Telefon vor dem medialen Endgerät befindet und dort beispielsweise eine Fernsehsendung ansieht.

Geht nun ein Anruf für den Nutzer ein, wird von der Vorrichtung zunächst der auf dem medialen Endgerät gerade bereitgestellte mediale Inhalt erschlossen,. Dann prüft die Vorrichtung, ob in der Speichereinrichtung Ereignisdateien mit ähnlichen Medialen Inhalten vorhanden sind. Ist dies der Fall, wird von der Vorrichtung geprüft, wie sich der Nutzer in der Vergangenheit hinsichtlich der Annahme oder Ablehnung von eingehenden Telefonanrufen verhalten hat. Darauf basierend reagiert dann die Vorrichtung in Bezug auf den gerade eingehenden Telefonanruf.

Dies soll anhand eines konkreten, nicht ausschließlichen Beispiels beschrieben werden. Beispielsweise geht der ankommende Anruf ein, während der Nutzer des Telefons über sein Fernsehgerät eine Nachrichtensendung anschaut. Die Vorrichtung ermittelt den medialen Inhalt "Nachrichtensendung" und prüft in dem Nutzerprofil, ob dort weitere Ereignisdateien mit medialen Inhalten "Nachrichtensendung" abgespeichert sind. Ist dies der Fall, prüft die Vorrichtung weiterhin, wie sich der Nutzer in diesen Fällen verhalten hat. Hat der Nutzer beispielsweise einkommende Anrufe in diesen fällen abgelehnt, geht die Vorrichtung davon aus, dass auch in der aktuellen Situation eine Ablehnung erfolgen soll und wird den eingehenden Telefonanruf ablehnen.

Die erfindungsgemäße Vorrichtung schafft somit eine Möglichkeit, durch Analyse aktueller medialer Inhalte, beispielsweise laufender Audio- und/oder Video-Streams eines ausgewählten Fernsehkanals und das Verhalten des Empfängers der medialen Inhalte Aussagen darüber zu treffen, ob dieser Empfänger gerade eingehende Telefonanrufe annehmen möchte oder nicht. Dabei kann nicht nur der aktuelle Inhalt eines Typs medialer Inhalte ermittelt werden. Vielmehr ist es auch möglich, auf diese Weise bestimmte Typen medialer Inhalte, beispielsweise den Typ "Nachrichtensendung" zu erkennen und festzustellen, ob der Nutzer während des Empfangs derartiger medialer Inhalte, beispielsweise während einer Nachrichtensendung, generell Anrufe auf seinem Telefon empfangen möchte oder nicht.

Vorteilhaft kann dabei vorgesehen sein, dass die Feststellung, ob es sich resultierend aus dem Vergleich um einen erwünschten oder unerwünschten Anruf handelt, in der Vorrichtung getroffen wird, sobald ein vorgegebener Grenzwert erreicht oder überschritten wird. So kann sichergestellt werden, dass eine zuvor vorgenommene Ablehnung eines Anrufs nicht bloß eine Ausnahme war. Zurückkommend auf das obige Beispiel könnte dies beispielsweise bedeuten, dass die Vorrichtung prüft, bei wie viel Ereignisdateien mit dem medialen Inhalt "Nachrichtensendung" der Nutzer einen ankommenden Telefonanruf in der Vergangenheit abgelehnt hat. Wenn dabei festgestellt wird, dass ein vorgegebener Grenzwert überschritten wird, beispielsweise dass mehr als 10mal ein ankommender Anruf abgelehnt worden ist, wird in der Vorrichtung die Feststellung getroffen, dass der Nutzer generell bei dem medialen Inhalt "Nachrichtensendung" keine ankommenden Anrufe entgegennehmen möchte. Wenn dann in einem späteren Fall eine derartige Konstellation auftritt, wird der ankommende Anruf von der Vorrichtung von vornherein abgelehnt.

Vorteilhaft ist vorgesehen, dass die Einrichtung zum Erschließen eines auf dem medialen Endgerät bereitgestellten medialen Inhalts zum Analysieren eines auf das mediale Endgerät übertragenen elektronischen Programmführers und/oder zum Erfassen eines Kanals, über den der mediale Inhalt auf dem medialen Endgerät dargestellt wird, ausgebildet ist. Als elektronischer Programmführer (EPG - Electronic Program Guide) werden generell elektronisch verbreitete Informationen über das aktuelle Hörfunk- und Fernsehprogramm bezeichnet. Die Daten werden heute in der Regel als Zusatzangebot von den Sendern ausgestrahlt. Durch die Erfassung des Kanals können Aussagen darüber getroffen werden, welcher Kanal vom medialen Endgerät gerade eingeschaltet ist. Dadurch wird die Bestimmung der medialen Inhalte noch genauer. Zusätzlich zu einem bestimmten medialen Inhalt, beispielsweise "Nachrichtensendung" kann auf diese Weise zusätzlich auch noch bestimmt werden, auf welchem Kanal diese Fernsehsendung läuft. Auf diese Weise kann der Nutzer erreichen, dass er nur bei ganz bestimmten Nachrichtensendungen, die auf bestimmten Kanälen laufen, nicht aber bei Nachrichtensendungen generell von eingehenden Telefonanrufen verschont werden möchte. Durch die Analyse des EPG wird zudem möglich zu bestimmen, wie lange die entsprechende Sendung dauert, damit eingehende Anrufe möglicherweise auf eine Zeit nach Beendigung der Nachrichtensendung verschoben werden können.

Vorzugsweise kann die Einrichtung zum Erschließen eines auf dem medialen Endgerät bereitgestellten medialen Inhalts zur Inhaltsanalyse von Audiodaten und/oder Videodaten und/oder Textdaten ausgebildet sein. Natürlich sind auch Kombinationen denkbar. Wenn es sich bei den medialen Inhalten beispielsweise um Videodaten handelt, können auch zusätzliche Informationen zur Erschließung des medialen Inhalts Berücksichtigung finden, beispielsweise Textinformationen für Hörgeschädigte oder dergleichen.

In weiterer Ausgestaltung kann die Einrichtung zum Verknüpfen des medialen Inhalts, des Nutzerverhaltens bezüglich der Annahme oder Ablehnung des eingehenden Telefonanrufs sowie der Telefonnummer des anrufenden Telefons zu einer Ereignisdatei ausgebildet sein. Auf diese Weise können auch Aussagen darüber getroffen werden, ob der Nutzer während der Bereitstellung der medialen Inhalte nur Anrufe bestimmter Anrufer, die anhand ihrer Telefonnummern identifizier bar sind, ablehnen möchte.

Vorteilhaft kann die Einrichtung zum Feststellen, ob es sich resultierend aus dem Vergleich um einen erwünschten oder unerwünschten Anruf handelt, Mittel aufweisen, um bei einem abgelehnten Anruf dem Telefon des Anrufers und/oder dem Telefon des Nutzers eine Mitteilung über den abgelehnten Anruf zu schicken. Alternativ oder zusätzlich kann vorgesehen sein, dass die Einrichtung zum Feststellen, ob es sich resultierend aus dem Vergleich um einen erwünschten oder unerwünschten Anruf handelt, Mittel zum Blockieren, Umleiten oder Verlegen eines abgelehnten Anrufs aufweisen.

Vorzugsweise kann die Vorrichtung eine Speichereinrichtung mit Telefonnummern bevorzugter Anrufer aufweisen, die mit der Einrichtung zum Feststellen, ob es sich resultierend aus dem Vergleich um einen erwünschten oder unerwünschten Anruf handelt, zusammenwirkt. Auf diese Weise wird es dem Nutzer ermöglicht, bestimmte Telefonnummern anzugeben, von denen er unabhängig von seinen sonstigen Vorgaben Telefonanrufe empfangen will, selbst wenn er gerade einer anderen Tätigkeit nachgeht. Der Nutzer kann somit Telefonnummern für solche eingehenden Anrufe angeben, die auf jeden Fall jederzeit durchgestellt werden. Der Nutzer kann diese Telefonnummern vorteilhaft frei bestimmen und in die Vorrichtung eingeben, in dieser bearbeiten, aber auch aus dieser wieder löschen.

Auch ist es vorteilhaft möglich, dass der Nutzer bestimmte Zeiträume eingibt, in denen er immer eingehende Telefonanrufe erhalten möchte, und zwar auch unabhängig davon, ob er gerade einer anderen Tätigkeit nachgeht, beispielsweise unabhängig davon, ob er gerade ein bestimmtes Fernsehprogramm anschaut.

Um eine wie vorstehend beschriebene erfindungsgemäße Vorrichtung betrieben zu können, ist es erforderlich, dass zunächst ein entsprechendes Nutzerprofil erstellt wird. Da die Vorrichtung vorzugsweise selbstlernend ausgebildet ist, wird sich ein solches Nutzerprofil über die Zeit stetig verändern und verfeinern, so dass mit zunehmender Verfahrensdauer immer genauere Aussagen darüber möglich werden, bei welchen medialen Inhalten der Nutzer des Telefons welche ankommenden Telefonanrufe akzeptiert, und welche nicht.

Gemäß einem zweiten Aspekt der Erfindung wird ein Verfahren zum Erstellen eines Nutzerprofils zum Erkennen von erwünschten und/oder unerwünschten Telefonanrufen in Abhängigkeit des Nutzerverhaltens eines Nutzers eines Telefons, bereitgestellt, wobei das Verfahren mittels einer Vorrichtung, die eine Schnittstelle zu wenigstens einem Telefon des Nutzers und eine Schnittstelle zu wenigstens einem medialen Endgerät, insbesondere einem Rundfunkgerät oder Fernsehgerät aufweist, und die insbesondere in einer wie weiter oben erfindungsgemäßen beschriebenen Weise ausgebildet ist, durchgeführt wird. Dieses Verfahren ist erfindungsgemäß gekennzeichnet durch folgende Schritte:
eine Feststelleinrichtung der Vorrichtung stellt den Eingang eines Telefonanrufs auf dem Telefon des Nutzers fest;
eine Überprüfungseinrichtung der Vorrichtung stellt einen räumlichen Bezug zwischen dem Telefon des Nutzers und dem medialen Endgerät her;
eine Erfassungseinrichtung erfasst des Aktivierungszustands des medialen Endgeräts;
eine Erschließungseinrichtung erschließt einen auf dem medialen Endgerät bereitgestellten medialen Inhalts zum Zeitpunkt des Eingangs eines Telefonanrufs auf dem Telefon des Nutzers;
eine Feststelleinrichtung stellt das Nutzerverhalten dahingehend fest, ob während der Bereitstellung des medialen Inhalts ein auf dem Telefon eingehender Anruf vom Nutzer angenommen oder abgelehnt wird;
eine Verknüpfungseinrichtung verknüpft den medialen Inhalt und das Nutzerverhalten bezüglich der Annahme oder Ablehnung des eingehenden Telefonanrufs zu einer Ereignisdatei;
die Ereignisdatei wird zur Erstellung eines Nutzerprofils in einer Speichereinrichtung abgespeichert.

Zu den Vorteilen, Merkmalen, Wirkungen und der Funktionsweise dieses Verfahrens wird vollinhaltlich auf die vorstehenden Ausführungen zur erfindungsgemäßen Vorrichtung Bezug genommen und verwiesen.

Gemäß noch einem weiteren Aspekt der Erfindung wird ein Verfahren zum Erkennen von erwünschten und/oder unerwünschten Telefonanrufen in Abhängigkeit des Nutzerverhaltens eines Nutzers eines Telefons bereitgestellt, wobei das Verfahren mittels einer Vorrichtung, die eine Schnittstelle zu wenigstens einem Telefon des Nutzers und eine Schnittstelle zu wenigstens einem medialen Endgerät, insbesondere einem Rundfunkgerät oder Fernsehgerät, aufweist, und die insbesondere in der wie weiter oben beschriebenen erfindungsgemäßen Weise ausgebildet ist, wobei das Verfahren durch folgende Schritte gekennzeichnet ist: eine Feststelleinrichtung der Vorrichtung stellt den Eingang eines Telefonanrufs auf dem Telefon des Nutzers fest;
eine Überprüfungseinrichtung der Vorrichtung stellt einen räumlichen Bezug zwischen dem Telefon des Nutzers und dem medialen Endgerät her;
eine Erfassungseinrichtung erfasst den Aktivierungszustand des medialen Endgeräts;
eine Erschließungseinrichtung erschließt einen auf dem medialen Endgerät bereitgestellten medialen Inhalt zum Zeitpunkt des Eingangs eines Telefonanrufs auf dem Telefon des Nutzers;
eine Vergleichseinrichtung vergleicht den medialen Inhalt während eines eingehenden Anrufs auf dem Telefon des Nutzers mit medialen Inhalten von in der Speichereinrichtung abgespeicherten Ereignisdateien eines Nutzerprofils, wobei die Ereignisdateien als Verknüpfungen von medialen Inhalten und dem Nutzerverhalten bezüglich der Annahme oder Ablehnung des eingehenden Telefonanrufs während des Zeitraums der Übertragung der entsprechenden medialen Inhalte ausgebildet sind,
eine Feststelleinrichtung stellt fest, ob es sich resultierend aus dem Vergleich um einen erwünschten oder unerwünschten Anruf handelt.

Zu den Vorteilen, Merkmalen, Wirkungen und der Funktionsweise dieses Verfahrens wird vollinhaltlich auf die vorstehenden Ausführungen zur erfindungsgemäßen Vorrichtung Bezug genommen und verwiesen.

Vorzugsweise wird das die Ereignisdateien aufweisende Nutzerprofil gemäß dem weiter oben beschriebenen erfindungsgemäßen Verfahren erstellt.

Vorteilhaft kann vorgesehen sein, dass eine Feststelleinrichtung das Nutzerverhalten dahingehend feststellt, ob während der Bereitstellung des medialen Inhalts ein auf dem Telefon eingehender Anruf vom Nutzer angenommen oder abgelehnt wird, dass eine Verknüpfungseinrichtung den medialen Inhalt und das Nutzerverhalten bezüglich der Annahme oder Ablehnung des eingehenden Telefonanrufs zu einer Ereignisdatei verknüpft und dass die Ereignisdatei zur Aktualisierung des Nutzerprofils in der Speichereinrichtung abgespeichert wird.

In weiterer Ausgestaltung ist vorteilhaft vorgesehen, dass die Einrichtung zum Erschließen eines auf dem medialen Endgerät bereitgestellten medialen Inhalts einen auf das mediale Endgerät übertragenen elektronischen Programmführers analysiert und/oder einen Kanal, über den der mediale Inhalt auf dem medialen Endgerät dargestellt wird, erfasst.

Vorzugsweise kann die Einrichtung zum Erschließen eines auf dem medialen Endgerät bereitgestellten medialen Inhalts den medialen Inhalt hinsichtlich Audiodaten und/oder Videodaten und/oder Textdaten analysieren.

Vorteilhaft kann die Ereignisdatei durch Verknüpfung des medialen Inhalts, des Nutzerverhaltens bezüglich der Annahme oder Ablehnung des eingehenden Telefonanrufs sowie der Telefonnummer des anrufenden Telefons erzeugt werden.

In weiterer Ausgestaltung ist vorteilhaft vorgesehen, dass bei Feststellung, dass es sich resultierend aus dem Vergleich um einen erwünschten oder unerwünschten Anruf handelt, bei Ablehnung des Anrufs dem Telefon des Anrufers und/oder dem Telefon des Nutzers eine Mitteilung über den abgelehnten Anruf geschickt wird und/oder dass die Einrichtung zum Feststellen, ob es sich resultierend aus dem Vergleich um einen erwünschten oder unerwünschten Anruf handelt, einen als abgelehnt identifizierten eingehenden Anruf blockiert, umleitet oder verlegt.

Vorteilhaft kann die Vorrichtung eine Speichereinrichtung mit Telefonnummern bevorzugter Anrufer aufweisen, die mit der Einrichtung zum Feststellen, ob es sich resultierend aus dem Vergleich um einen erwünschten oder unerwünschten Anruf handelt, zusammenwirkt, dass bei einem eingehenden Anruf die Telefonnummer des anrufenden Telefons mit den Telefonnummern bevorzugter Anrufer verglichen wird und dass bei Feststellen einer Übereinstimmung der Anruf unabhängig von den medialen Inhalten zum Telefon des Nutzers durchgestellt wird.

Durch die vorliegende Erfindung wird eine Reihe von Vorteilen geschaffen. Dies soll anhand eines vorteilhaften, jedoch nicht ausschließlichen Ausführungsbeispiels verdeutlicht werden, bei dem ein Nutzer eine Telefons, insbesondere eines Mobiltelefons, erreichen möchte, dass eingehende Anrufe eines anderen Teilnehmers abgelehnt werden, solange der Nutzer eine bestimmte Fernsehsendung anschaut.

Bisher bestand das Problem, dass ein solcher Nutzer, während er ein bestimmtes Fernsehprogramm anschaute, von ankommenden Anrufen oftmals unterbrochen wurde. Dies betraf dann sowohl den nutzer, als auch den Anrufer. Der das Fernsehprogramm anschauende Nutzer war oftmals frustriert, da er seinen Fokus von der Fernsehsendung weg auf den eingehenden Anruf richten musste. Der Anrufer hingegen war dann oftmals unglücklich, wenn er realisierte, dass der den Angerufenen beim Betrachten der Fernsehsendung gestört hatte.

Durch die erfindungsgemäße Lösung wird es nunmehr möglich, eingehende Anrufe, die der angerufene Nutzer während der Fernsehsendung nicht annehmen möchte, zurückzuweisen, oder auf einen geeigneten späteren Zeitpunkt umzuleiten oder zu verschieben.

Die erfindungsgemäße Lösung ist selbstlernend und lernt vom Verhalten des Nutzers, ankommende Anrufe anzunehmen oder abzulehnen, indem der mediale Inhalt, in diesem Fall das Fernsehprogramm, analysiert und verstanden wird. Die erfindungsgemäße Lösung kann dabei zwischen relevanten und nicht-relevanten eingehenden Anrufen unterscheiden, während der Nutzer eine Fernsehsendung anschaut, indem in einem Nutzerprofil abgelegte Präferenzen genutzt werden. Die erfindungsgemäße Lösung stellt insbesondere eine neuartige Verbindung zwischen einem Telefon, einem medialen Endgerät, einer Einrichtung zur Auswahl eines Fernsehkanals und einem elektronischen Programmführer bereit.

In dem Nutzerprofil sind Ereignisdateien abgelegt, die ein Nutzerverhalten hinsichtlich des Annehmens/Ablehnens von eingehenden Anrufen während bestimmter Fernsehsendungen in der Vergangenheit präsentieren. Auf der Basis dieser Informationen können nun auch bei aktuellen Fernsehsendungen Rückschlüsse über das Nutzerverhalten gezogen werden. Solche Anrufe, die als für den Nutzer störend eingestuft werden, können dann von vornherein abgelehnt werden. Dennoch bleibt die Möglichkeit bestehen, bestimmte Anrufe, die eine erhöhte Priorität haben, unabhängig vom bestehenden Nutzerprofil auch jeder Zeit durchstellen zu können. Die erfindungsgemäße Lösung wird folglich nur dann einen Nutzer, der eine Fernsehsendung anschaut, durch einen eingehenden Anruf unterbrechen, wenn sich dies aus dem Nutzerprofil ergibt. Unpassende Anrufe hingegen werden, zumindest für die Dauer der Fernsehsendung, abgelehnt.

Wenn die Vorrichtung, die sich beispielsweise innerhalb des Telefons des Nutzers befindet, einen einkommenden Anruf empfängt, ermittelt die Vorrichtung den Kanal, auf dem die Fernsehsendung läuft sowie den elektronischen Programmführer, um auf diese Weise die medialen Inhalte zu erschließen. Weiterhin wird geprüft, wie das Nutzerverhalten in früheren Fällen war und ob sich die Telefonnummer des Anrufers auf der Liste mit den bevorzugten Telefonnummern befindet. Auf der Basis dieser Informationen wird dann von der Vorrichtung entschieden, ob ein ankommender Anruf angenommen oder abgelehnt wird. Nach Durchführung dieser Prozedur wird das Verhalten des Nutzers im aktuellen Fall registriert und im Nutzerprofil als weitere, aktuelle Ereignisdatei abgespeichert, wodurch das Nutzerprofil neu berechnet und aktualisiert wird.

Nachfolgend wir die Erfindung anhand eines Ausführungsbeispiels unter Bezugnahme auf die beiliegende Zeichnung näher erläutert. Dabei zeigt die einzige Figur in schematischer Darstellung eine erfindungsgemäße Vorrichtung, auf der das erfindungsgemäße Verfahren ablaufen kann.

Bei diesem Ausführungsbeispiel wird das Profil eines Nutzers anhand von dessen Fernsehkonsumprioritäten festgelegt. Das vom Nutzer angeschaute Fernsehprogramm wird analysiert, beispielsweise indem ein so genannter elektronischer Programmführer (EPG - Electronic Program Guide) überprüft wird. Das Profil wird dann in einer Weise erstellt, indem von der Vorrichtung geprüft wird, wann eingehende Anrufe vom Nutzer geblockt werden und was für ein Programm gerade im Fernsehen läuft. Dies geschieht beispielsweise durch entsprechende Analyse des Electronic Program Guide. Wenn dann später ein entsprechendes Programm läuft, werden eingehende Anrufe vom System gleich blockiert/umgeleitet, sofern es sich nicht um ausgenommene Rufnummern handelt.

Zur Durchführung des Verfahrens ist eine Vorrichtung 10 zum Erkennen von erwünschten und/oder unerwünschten Telefonanrufen in Abhängigkeit des Nutzerverhaltens eines Nutzers eines Telefons 12 vorgesehen.

Die Vorrichtung 10 verfügt zunächst über eine Schnittstelle 11 zu wenigstens einem Telefon 12 des Nutzers, sowie über eine Schnittstelle 13 zu wenigstens einem medialen Endgerät 14, insbesondere einem Fernsehgerät. Über diese Schnittstellen 11, 13 kann die Vorrichtung mit dem Telefon 12 und dem medialen Endgerät 14 kommunizieren, was durch gestrichelte Pfeile verdeutlicht ist.

Die Vorrichtung 10 verfügt über eine Einrichtung 15 zum Feststellen des Eingangs eines Telefonanrufs auf dem Telefon 12 des Nutzers. Dazu kann die Feststelleinrichtung 15 überprüfen, ob auf dem Telefon 12 des Nutzers ein von einem anderen Telefon 18 initiierter Telefonanruf eingeht, was durch den Pfeil 17 symbolisiert ist. Da die Feststellung je nach Ausgestaltung der Vorrichtung unterschiedlich sein kann, ist dieser Feststellschritt lediglich durch einen Pfeil 16 symbolisiert.

Weiterhin verfügt die Vorrichtung 10 über eine Überprüfungseinrichtung 19, mittels derer ein räumlicher Bezug zwischen dem Telefon 12 des Nutzers und dem medialen Endgerät 14 festgestellt wird. Dazu bestimmt die Überprüfungseinrichtung 19 in einem ersten Feststellschritt 20 beispielsweise die Position des Telefons 20. In einem zweiten Feststellschritt 21 wird die Position des medialen Endgeräts 14 ermittelt. Die ermittelten Positionswerte werden miteinander verglichen. Wird eine Übereinstimmung, zumindest aber eine räumliche Nähe der Positionswerte erkannt, wird von der Überprüfungseinrichtung 19 ein räumlicher Bezug zwischen dem Telefon 12 und dem medialen Endgerät 14 festgestellt.

In der Vorrichtung 10 ist darüber hinaus eine Einrichtung 22 zum Erfassen des Aktivierungszustands des medialen Endgeräts 14, mittels derer festgestellt wird, ob das mediale Endgerät 14 aktiviert, das heißt eingeschaltet ist. Eine weitere Einrichtung 23 dient zum Erschließen des auf dem medialen Endgerät 14 bereitgestellten medialen Inhalts zum Zeitpunkt des Eingangs eines Telefonanrufs 17 auf dem Telefon 12 des Nutzers.

In einem Feststellschritt, der durch einen Pfeil 25 symbolisiert ist, kann die Vorrichtung 10 über eine Feststelleinrichtung 24 das Nutzerverhalten dahingehend überprüfen, ob während der Bereitstellung des medialen Inhalts ein auf dem Telefon 12 eingehender Anruf 17 vom Nutzer angenommen oder abgelehnt wird.

Diese Information wird in einem Verknüpfungsschritt 29 von der Feststelleinrichtung 24 an eine Verknüpfungseinrichtung 26 übertragen. Ebenso wird in einem Verknüpfungsschritt 28 der in der Einrichtung 23 erschlossene mediale Inhalt an die Verknüpfungseinrichtung 26 übertragen. In der Verknüpfungseinrichtung 26 werden der mediale Inhalt und das Nutzerverhalten bezüglich der Annahme oder Ablehnung des eingehenden Telefonanrufs 17 zu einer Ereignisdatei 27 verknüpft.

Eine Speichereinrichtung 30 ist zum Abspeichern der Ereignisdatei 27 zur Erstellung eines Nutzerprofils 31 vorgesehen.

In eine Vergleichseinrichtung 32 der Vorrichtung 10 wird in einem Vergleichschritt 33 zunächst der mediale Inhalt von der Einrichtung 23 zum Erfassen des medialen Inhalts übertragen. In einem weiteren Vergleichsschritt 34 werden die Ereignisdateien 27 des Nutzerprofils 31 in die Vergleichseinrichtung 32 übertragen. Nun wird in der Vergleichseinrichtung 32 der mediale Inhalt während eines eingehenden Anrufs 17 auf dem Telefon 12 des Nutzers mit medialen Inhalten von in der Speichereinrichtung 30 abgespeicherten Ereignisdateien 27 des Nutzerprofils 31 verglichen. Eine Feststelleinrichtung 35 stellt in einem Feststellschritt, der durch den Pfeil 36 symbolisiert ist, fest, ob es sich resultierend aus dem Vergleich bei dem eingehenden Telefonanruf 17 um einen erwünschten oder unerwünschten Anruf handelt.

Weiterhin kann die Einrichtung 35 zum Feststellen, ob es sich resultierend aus dem Vergleich um einen erwünschten oder unerwünschten Anruf handelt, Mittel 37 aufweisen, um bei einem angelehnten Anruf dem Telefon 18 des Anrufers eine Mitteilung über den abgelehnten Anruf zu schicken, was durch den Pfeil 38 gekennzeichnet ist. Natürlich kann auch der Nutzer des Telefons 12 eine entsprechende Nachricht erhalten.

Beispielsweise kann vorgesehen sein, dass die Vorrichtung 10 als eigenständiges Gerät vorgesehen ist, das über die Schnittstellen 11, 13 bei Bedarf mit dem Telefon 12 des Nutzers und mit dem medialen Endgerät kommuniziert. Natürlich kann auch vorgesehen sein, dass die Vorrichtung 10 in einem Telefon 12, insbesondere einem Mobiltelefon, oder in einem medialen Endgerät 14, insbesondere einem Fernsehgerät, vorgesehen ist.

Die vorliegende Erfindung stellt somit eine Lösung bereit, bei der ein bestimmter Kontext ermittelt wird, beispielsweise ein medialer Inhalt, und bei der weiterhin festgestellt wird, ob der Nutzer des Telefons 12 während dieses Kontextes durch einen eingehenden Anruf 17 gestört werden will. Dabei handelt es sich insbesondere um ein selbstlernendes System, das mit jedem weiteren eingehenden Anruf 17 automatisch dazulernt und weitergebildet wird.

### Bezugszeichenliste

- 10: Vorrichtung zum Erkennen von erwünschten und/oder unerwünschten Telefonanrufen

- 11: Schnittstelle zu einem Telefon
- 12: Telefon
- 13: Schnittstelle zu einem medialen Endgerät
- 14: Mediales Endgerät (Fernsehgerät)
- 15: Einrichtung zum Feststellen des Eingangs eines Telefonanrufs
- 16: Feststellschritt bezüglich des Eingangs eines Telefonanrufs
- 17: Eingehender Telefonanruf
- 18: Telefon eines Anrufers
- 19: Überprüfungseinrichtung

- 20: Feststellschritt bezüglich des Bestehens eines räumlichen Bezugs
- 21: Feststellschritt bezüglich des Bestehens eines räumlichen Bezugs
- 22: Einrichtung zum Erfassen des Aktivierungszustands des medialen Endgeräts
- 23: Einrichtung zum Erschließen eines medialen Inhalts
- 24: Einrichtung zur Feststellung des Nutzerverhaltens, ob ein Anruf angenommen oder abgelehnt wird
- 25: Feststellschritt
- 26: Verknüpfungseinrichtung
- 27: Ereignisdatei
- 28: Verknüpfungsschritt
- 29: Verknüpfungsschritt

- 30: Speichereinrichtung
- 31: Nutzerprofil
- 32: Vergleichseinrichtung
- 33: Vergleichsschritt
- 34: Vergleichsschritt
- 35: Feststelleinrichtung
- 36: Feststellschritt
- 37: Mittel zum Senden einer Nachricht
- 38: Mitteilungsschritt

## Patentansprüche

1. Vorrichtung (10) zum Erkennen von erwünschten und/oder unerwünschten Telefonanrufen in Abhängigkeit des Nutzerverhaltens eines Nutzers eines Telefons, aufweisend
eine Schnittstelle (11) zu wenigstens einem Telefon (12) des Nutzers;
eine Schnittstelle (13) zu wenigstens einem medialen Endgerät (14), insbesondere einem Rundfunkgerät oder Fernsehgerät;
eine Einrichtung (15) zum Feststellen (16) des Eingangs eines Telefonanrufs (17) auf dem Telefon (12) des Nutzers;
eine Überprüfungseinrichtung (19) zur Feststellung (20, 21) eines räumlichen Bezugs zwischen dem Telefon (12) des Nutzers und dem medialen Endgerät (14);
eine Einrichtung (22)zum Erfassen des Aktivierungszustands des medialen Endgeräts(14);
eine Einrichtung (23) zum Erschließen eines auf dem medialen Endgerät (14) bereitgestellten medialen Inhalts zum Zeitpunkt des Eingangs eines Telefonanrufs (17) auf dem Telefon (12) des Nutzers;
eine Einrichtung (24) zur Feststellung (25) des Nutzerverhaltens dahingehend, ob während der Bereitstellung des medialen Inhalts ein auf dem Telefon (12) eingehender Anruf (17) vom Nutzer angenommen oder abgelehnt wird;
eine Einrichtung (26) zum Verknüpfen des medialen Inhalts und des Nutzerverhaltens bezüglich der Annahme oder Ablehnung des eingehenden Telefonanrufs (17) zu einer Ereignisdatei (27);
eine Speichereinrichtung (30) zum Abspeichern der Ereignisdatei (27) zur Erstellung eines Nutzerprofils (31);
eine Vergleichseinrichtung (32) zum Vergleichen (33, 34) des medialen Inhalts während eines eingehenden Anrufs (17) auf dem Telefon (12) des Nutzers mit medialen Inhalten von in der Speichereinrichtung (30) abgespeicherten Ereignisdateien (27)des Nutzerprofils (31);
eine Einrichtung (35) zum Feststellen, ob es sich resultierend aus dem Vergleich um einen erwünschten oder unerwünschten Anruf handelt.

2. Vorrichtung nach Anspruch 1, **dadurch gekennzeichnet, dass** die Einrichtung (23) zum Erschließen eines auf dem medialen Endgerät (14) bereitgestellten medialen Inhalts zum Analysieren eines auf das mediale Endgerät (14) übertragenen elektronischen Programmführers und/oder zum Erfassen eines Kanals, über den der mediale Inhalt auf dem medialen Endgerät (14) dargestellt wird, ausgebildet ist.

3. Vorrichtung nach Anspruch 1 oder 2, **dadurch gekennzeichnet, dass** die Einrichtung (23) zum Erschließen eines auf dem medialen Endgerät (14) bereitgestellten medialen Inhalts zur Inhaltsanalyse von Audiodaten und/oder Videodaten und/oder Textdaten ausgebildet ist.

4. Vorrichtung nach einem der Ansprüche 1 bis 3, **dadurch gekennzeichnet, dass** die Einrichtung (26) zum Verknüpfen des medialen Inhalts, des Nutzerverhaltens bezüglich der Annahme oder Ablehnung des eingehenden Telefonanrufs sowie der Telefonnummer des anrufenden Telefons zu einer Ereignisdatei ausgebildet ist.

5. Vorrichtung nach einem der Ansprüche 1 bis 4, **dadurch gekennzeichnet, dass** die Einrichtung (35) zum Feststellen, ob es sich resultierend aus dem Vergleich um einen erwünschten oder unerwünschten Anruf handelt, Mittel (37) aufweist, um bei einem abgelehnten Anruf dem Telefon (18) des Anrufers und/oder dem Telefon (12) des Nutzers eine Mitteilung über den abgelehnten Anruf zu schicken und/oder dass die Einrichtung (35) zum Feststellen, ob es sich resultierend aus dem Vergleich um einen erwünschten oder unerwünschten Anruf handelt, Mittel zum Blockieren, Umleiten oder Verlegen eines abgelehnten Anrufs aufweist.

6. Vorrichtung nach einem der Ansprüche 1 bis 5, **dadurch gekennzeichnet, dass** diese eine Speichereinrichtung (30) mit Telefonnummern bevorzugter Anrufer aufweist, die mit der Einrichtung (35) zum Feststellen, ob es sich resultierend aus dem Vergleich um einen erwünschten oder unerwünschten Anruf handelt, zusammenwirkt.

7. Vorrichtung nach einem der Ansprüche 1 bis 6, **dadurch gekennzeichnet, dass** die Vorrichtung (10) in einem Telefon (12), insbesondere einem Mobiltelefon, und/oder in einem medialen Endgerät (14), insbesondere einem Fernsehgerät oder Rundfunkgerät, vorgesehen ist.

8. Verfahren zum Erkennen von erwünschten und/oder unerwünschten Telefonanrufen in Abhängigkeit des Nutzerverhaltens eines Nutzers eines Telefons mittels einer Vorrichtung, die eine Schnittstelle zu wenigstens einem Telefon des Nutzers und eine Schnittstelle zu wenigstens einem medialen Endgerät, insbesondere einem Rundfunkgerät oder Fernsehgerät aufweist, und die insbesondere nach einem der Ansprüche 1 bis 7 ausgebildet ist, **gekennzeichnet durch** folgende Schritte:
eine Feststelleinrichtung der Vorrichtung stellt den Eingang eines Telefonanrufs auf dem Telefon des Nutzers fest;
eine Überprüfungseinrichtung der Vorrichtung stellt einen räumlichen Bezug zwischen dem Telefon des Nutzers und dem medialen Endgerät her;
eine Erfassungseinrichtung erfasst den Aktivierungszustand des medialen Endgeräts;
eine Erschließungseinrichtung erschließt einen auf dem medialen Endgerät bereitgestellten medialen Inhalt zum Zeitpunkt des Eingangs eines Telefonanrufs auf dem Telefon des Nutzers;
eine Vergleichseinrichtung vergleicht den medialen Inhalt während eines eingehenden Anrufs auf dem Telefon des Nutzers mit medialen Inhalten von in der Speichereinrichtung abgespeicherten Ereignisdateien eines Nutzerprofils, wobei die Ereignisdateien als Verknüpfungen von medialen Inhalten und dem Nutzerverhalten bezüglich der Annahme oder Ablehnung des eingehenden Telefonanrufs während des Zeitraums der Übertragung der entsprechenden medialen Inhalte ausgebildet sind,
eine Feststelleinrichtung stellt fest, ob es sich resultierend aus dem Vergleich um einen erwünschten oder unerwünschten Anruf handelt.

9. Verfahren nach Anspruch 8, **dadurch gekennzeichnet, dass** das die Ereignisdateien aufweisende Nutzerprofil gemäß den folgenden Schritten erstellt wird:
Eine Feststelleinrichtung der Vorrichtung stellt den Eingang eines Telefonanrufs auf dem Telefon des Nutzers fest; eine Überprüfungseinrichtung der Vorrichtung stellt einen räumlichen Bezug zwischen dem Telefon des Nutzers und dem medialen Endgerät her; eine Erfassungseinrichtung erfasst des Aktivierungszustands des medialen Endgeräts; eine Erschließungseinrichtung erschließt einen auf dem medialen Endgerät bereitgestellten medialen Inhalts zum Zeitpunkt des Eingangs eines Telefonanrufs auf dem Telefon des Nutzers; eine Feststelleinrichtung stellt das Nutzerverhalten dahingehend fest, ob während der Bereitstellung des medialen Inhalts ein auf dem Telefon eingehender Anruf vom Nutzer angenommen oder abgelehnt wird; eine Verknüpfungseinrichtung verknüpft den medialen Inhalt und das Nutzerverhalten bezüglich der Annahme oder Ablehnung des eingehenden Telefonanrufs zu einer Ereignisdatei; die Ereignisdatei wird zur Erstellung eines Nutzerprofils in einer Speichereinrichtung abgespeichert.

10. Verfahren nach Anspruch 8 oder 9, **dadurch gekennzeichnet, dass** eine Feststelleinrichtung das Nutzerverhalten dahingehend feststellt, ob während der Bereitstellung des medialen Inhalts ein auf dem Telefon eingehender Anruf vom Nutzer angenommen oder abgelehnt wird, dass eine Verknüpfungseinrichtung den medialen Inhalt und das Nutzerverhalten bezüglich der Annahme oder Ablehnung des eingehenden Telefonanrufs zu einer Ereignisdatei verknüpft und dass die Ereignisdatei zur Aktualisierung des Nutzerprofils in der Speichereinrichtung abgespeichert wird.

11. Verfahren nach einem der Ansprüche 8 bis 10, **dadurch gekennzeichnet, dass** die Einrichtung zum Erschließen eines auf dem medialen Endgerät bereitgestellten medialen Inhalts einen auf das mediale Endgerät übertragenen elektronischen Programmführers analysiert und/oder einen Kanal, über den der mediale Inhalt auf dem medialen Endgerät dargestellt wird, erfasst.

12. Verfahren nach einem der Ansprüche 8 bis 11, **dadurch gekennzeichnet, dass**
die Einrichtung zum Erschließen eines auf dem medialen Endgerät bereitgestellten medialen Inhalts den medialen Inhalt hinsichtlich Audiodaten und/oder Videodaten und/oder Textdaten analysiert.

13. Verfahren nach einem der Ansprüche 8 bis 12, **dadurch gekennzeichnet, dass**
die Ereignisdatei durch Verknüpfung des medialen Inhalts, des Nutzerverhaltens bezüglich der Annahme oder Ablehnung des eingehenden Telefonanrufs sowie der Telefonnummer des anrufenden Telefons erzeugt wird.

14. Verfahren nach Anspruch 8, **dadurch gekennzeichnet, dass** bei Feststellung,
dass es sich resultierend aus dem Vergleich um einen erwünschten oder unerwünschten Anruf handelt, bei Ablehnung des Anrufs dem Telefon des Anrufers und/oder dem Telefon des Nutzers eine Mitteilung über den abgelehnten Anruf geschickt wird und/oder dass die Einrichtung zum Feststellen, ob es sich resultierend aus dem Vergleich um einen erwünschten oder unerwünschten Anruf handelt, einen als abgelehnt identifizierten eingehenden Anruf blockiert, umleitet oder verlegt, oder dass die Vorrichtung eine Speichereinrichtung mit Telefonnummern bevorzugter Anrufer aufweist, die mit der Einrichtung zum Feststellen, ob es sich resultierend aus dem Vergleich um einen erwünschten oder unerwünschten Anruf handelt, zusammenwirkt, dass bei einem eingehenden Anruf die Telefonnummer des anrufenden Telefons mit den Telefonnummern bevorzugter Anrufer verglichen wird und dass bei Feststellen einer Übereinstimmung der Anruf unabhängig von den medialen Inhalten zum Telefon des Nutzers durchgestellt wird.

## Claims

1. A device (10) for recognizing desired and/or non-desired telephone calls in dependency of the user behavior of a user of a telephone device, comprising an interface (11) to at least one telephone device (12) of the user;
an interface (13) to at least one media terminal (14), in particular to a radio device or to a television device;
a device (15) for detecting (16) an incoming telephone call (17) on the telephone device (12) of the user;
a checking device (19) for determining (20, 21) a spatial relation between the telephone device (12) of the user and the media terminal (14);
a device (22) for detecting the state of activation of the media terminal (14);
a device (23) for making accessible a media content being provided on the media terminal (14) at the time of the receipt of the incoming telephone call (17) on the telephone device (12) of the user;
a device (25) for determining (25) the user behavior such, whether during the provision of the media content an incoming call (17) on the telephone device (12) is accepted or rejected by the user:
a device (26) for linking the media content and the user behavior with regard to the acceptance or the rejection of the incoming call (17) to an event file (27):
a storage device (30) for storing the event file (27) for generating a user profile (31); a comparison device (32) for comparing (33, 34) the media content during an incoming call (17) on the telephone device (12) of the user with media contents of event files (27) of the user profile (31) being stored in the storage device (30);
a device (35) for determining, whether, resulting from the comparison, it is a desired or non-desired call.

2. The device according to claim 1, **characterized in that** the device (23) for making accessible a media content being provided on the media terminal (14) is provided for analyzing an electronic program guide being transmitted to the media terminal (14) and/or for detecting a channel, over which the media content is presented on the media terminal (14).

3. The device according to claim 1 or 2, **characterized in that** the device (23) for making accessible a media content being provided on the media terminal (14) is provided for analyzing the content of audio data and/or video data and/or text data.

4. The device according to anyone of claims 1 to 3, **characterized in that** the device (26) is provided for linking the media content, the user behavior with regard to the acceptance or rejection of the incoming call as well as the telephone number of the calling telephone device to an event file.

5. The device according to anyone of claims 1 to 4, **characterized in that** the device (35) for determining whether, resulting from the comparison, it is a desired or non-desired call, comprises means (37) for, in the case of a rejected call (18), sending a message with regard to the rejected call to the telephone device (18) of the caller and/or to the telephone device (12) of the user, and/or that the device (35) for determining whether, resulting from the comparison, it is a desired or non-desired call, comprises means for blocking, redirecting or rescheduling of a rejected call.

6. The device according to anyone of claims 1 to 5, **characterized in that** it comprises a storage device (30) with telephone numbers of preferred callers, which cooperates with the device (35) for determining whether, resulting from the comparison, it is a desired or non-desired call.

7. The device according to anyone of claims 1 to 6, **characterized in that** the device (10) is provided in a telephone device (12), in particular in a mobile phone, and/or in a media terminal (14), in particular a television device or a radio device.

8. A method for recognizing desired and/or non-desired telephone calls in dependency of the user behavior of a user of a telephone device by means of a device, which comprises an interface to at least one telephone device of the user and an interface to at least one media terminal, in particular to a radio device or to a television device, and which is preferably provided according to anyone of claims 1 to 7, said method being **characterized by** the following steps:
a detection device of the device detects an incoming telephone call on the telephone device of the user;
a checking device of the device produces a spatial relation between the telephone device of the user and the media terminal;
a detection device detects the state of activation of the media terminal;
a device for making accessible contents makes accessible a media content being provided on the media terminal at the time of the receipt of an incoming telephone call on the telephone device of the user;
a comparison device compares the media content during an incoming call on the telephone device of the user with media contents of event files of a user profile being stored in the storage device, said event files being provided as linkages of media contents and the user behavior with regard to the acceptance or rejection of the incoming call during the time period of the transmission of the respective media contents;
a determining device determines, whether, resulting from the comparison, it is a desired or non-desired call.

9. The method according to claim 8, **characterized in that** the user profile, which comprises the event files, is generated according to the following steps:
a detecting device of the device detects an incoming telephone call on the telephone device of the user; a checking device of the device produces a spatial relation between the telephone device of the user and the media terminal; a detection device detects the state of activation of the media terminal; a device for making accessible contents makes accessible a media content being provided on the media terminal at the time of the receipt of an incoming telephone call on the telephone device of the user; a device for determining determines the user behavior such, whether during the provision of the media content an incoming call on the telephone device is accepted or rejected by the user; a linkage device links the media content and the user behavior with regard to the acceptance or the rejection of the incoming call to an event file; the event file is stored a storage device for generating a user profile.

10. The method according to claim 8 or 9, **characterized in that** a determining device determines the user behavior such, whether during the provision of the media content an incoming call on the telephone device is accepted or rejected by the user, that a linkage device links the media content and the user behavior with regard to the acceptance or rejection of the incoming call to an event file and that the event file is stored in the storage device for bringing the user profile up to date.

11. The method according to anyone of claims 8 to 10, **characterized in that** the device for making accessible a media content being provided on the media terminal analyses an electronic program guide being transmitted to the media terminal and/or detects a channel, over which the media content is presented on the media terminal.

12. The method according to anyone of claims 8 to 11, **characterized in that** the device for making accessible a media content being provided on the media terminal analyses the media content with regard to audio data and/or video data and/or text data.

13. The method according to anyone of claims 8 to 12, **characterized in that** the event file is generated by means of linking the media content, the user behavior with regard to the acceptance or rejection of the incoming call as well as the telephone number of the calling telephone device.

14. The method according to claim 8, **characterized in that** upon a determination, that it is, resulting from the comparison, a desired or non-desired call, a message with regard to the rejected call is sent to the telephone device of the caller and/or to the telephone device of the user in the case of a rejected call, and/or that the device for determining, whether, resulting from the comparison, it is a desired or non-desired call blocks, redirects or reschedules an incoming call being identified as a rejected call, or that the device comprises a storage device with telephone numbers of preferred callers, which cooperates with the device for determining whether, resulting from the comparison, it is a desired or non-desired call, that during an incoming call the telephone number of the calling telephone device is compared to the telephone numbers of preferred callers and that, if a match is detected, the call is directed to the telephone device of the user independently from the media contents.

## Revendications

1. Dispositif (10) servant à identifier des appels téléphoniques souhaités et/ou non souhaités en fonction du comportement d'utilisateur d'un utilisateur d'un téléphone, présentant
une interface (11) avec au moins un téléphone (12) de l'utilisateur ;
une interface (13) avec au moins un terminal (14) multimédia, en particulier un appareil radio ou un téléviseur ;
un système (15) servant à déterminer (16) la réception d'un appel téléphonique (17) sur le téléphone (12) de l'utilisateur ;
un système de vérification (19) servant à déterminer (20, 21) un rapport spatial entre le téléphone (12) de l'utilisateur et le terminal multimédia (14) ;
un système (22) servant à détecter l'état d'activation du terminal multimédia (14) ;
un système (23) servant à ouvrir un contenu multimédia fourni sur le terminal multimédia (14) au moment de la réception d'un appel téléphonique (17) sur le téléphone (12) de l'utilisateur ;
un système (24) servant à déterminer (25) le comportement d'utilisateur pour savoir si, lorsque le contenu multimédia est fourni, un appel (17) entrant sur le téléphone (12) est accepté ou refusé par l'utilisateur ;
un système (26) servant à combiner le contenu multimédia et le comportement d'utilisateur en matière de réception ou de refus de l'appel téléphonique (17) entrant en un fichier d'événements (27) ;
un système de mémorisation (30) servant à sauvegarder le fichier d'événements (27) aux fins de la création d'un profil d'utilisateur (31) ;
un système de comparaison (32) servant à comparer (33, 34) le contenu multimédia au cours de la réception d'un appel (17) sur le téléphone (12) de l'utilisateur avec des contenus multimédia de fichiers d'événements (27), sauvegardés dans le système de mémorisation (30), du profil d'utilisateur (31) ;
un système (35) servant à déterminer s'il s'agit, à la suite de la comparaison, d'un appel souhaité ou non souhaité.

2. Dispositif selon la revendication 1, **caractérisé en ce que** le système (23) servant à ouvrir un contenu multimédia fourni sur le terminal multimédia (14) est réalisé afin d'analyser un guide de programmes électronique transmis sur le terminal (14) multimédia et/ou servant à détecter un canal, qui permet de représenter le contenu multimédia sur le terminal multimédia (14).

3. Dispositif selon la revendication 1 ou 2, **caractérisé en ce que** le système (23) servant à ouvrir un contenu multimédia fourni sur le terminal multimédia (14) est réalisé aux fins de l'analyse de contenu de données audio et/ou de données vidéo et/ou de données de texte.

4. Dispositif selon l'une quelconque des revendications 1 à 3, **caractérisé en ce que** le système (26) servant à combiner le contenu multimédia, le comportement d'utilisateur en matière d'acceptation ou de refus de l'appel téléphonique entrant ainsi que le numéro de téléphone du téléphone appelant en un fichier d'événements.

5. Dispositif selon l'une quelconque des revendications 1 à 4, **caractérisé en ce que** le système (35) servant à déterminer s'il s'agit, suite à la comparaison, d'un appel souhaité ou non souhaité, présente des moyens (37) pour, dans le cas d'un appel refusé, envoyer au téléphone (18) de l'appelant et/ou au téléphone (12) de l'utilisateur un message concernant l'appel refusé, et/ou que le système (35) servant à déterminer s'il s'agit, suite à la comparaison, d'un appel souhaité ou non souhaité, des moyens servant à bloquer, rediriger ou reporter un appel refusé.

6. Dispositif selon l'une quelconque des revendications 1 à 5, **caractérisé en ce que** ledit dispositif présente un système de mémorisation (30) comprenant des numéros de téléphone d'appelants favoris, lequel coopère avec le système (35) servant à déterminer s'il s'agit, suite à la comparaison, d'un appel souhaité ou non souhaité.

7. Dispositif selon l'une quelconque des revendications 1 à 6, **caractérisé en ce que** le dispositif (10) est prévu dans un téléphone (12), en particulier dans un téléphone mobile et/ou dans un terminal multimédia (14), en particulier un téléviseur ou un appareil radio.

8. Procédé servant à identifier des appels téléphoniques souhaités et/ou non souhaités en fonction du comportement d'utilisateur d'un utilisateur d'un téléphone au moyen d'un dispositif, qui présente une interface avec au moins un téléphone de l'utilisateur et une interface avec au moins un terminal multimédia, en particulier un appareil radio ou un téléviseur, et qui est réalisé en particulier selon l'une quelconque des revendications 1 à 7,
**caractérisé par** des étapes qui suivent :
un système de détermination du dispositif détermine la réception d'un appel téléphonique sur le téléphone de l'utilisateur ;
un système de vérification du dispositif établit un rapport spatial entre le téléphone de l'utilisateur et le terminal multimédia ;
un système de détection détecte l'état d'activation du terminal multimédia ;
un système d'ouverture ouvre un contenu multimédia fourni sur le terminal multimédia ouvre au moment de la réception d'un appel téléphonique sur le téléphone de l'utilisateur ;
un système de comparaison compare le contenu multimédia au cours d'un appel entrant sur le téléphone de l'utilisateur à des contenus multimédia de fichiers d'événements sauvegardés dans le système de mémorisation d'un profil d'utilisateur, dans lequel les fichiers d'événements sont réalisés sous la forme de combinaisons de contenus multimédia et du comportement d'utilisateur en matière de la réception ou du refus de l'appel téléphonique entrant au cours du laps de temps du transfert des contenus multimédia correspondants,
un système de détermination détermine s'il s'agit, suite à la comparaison, d'un appel souhaité ou non souhaité.

9. Procédé selon la revendication 8,
**caractérisé en ce que** le profil d'utilisateur présentant les fichiers d'événements est créé selon les étapes qui suivent :
un système de détermination du dispositif détermine la réception d'un appel téléphonique sur le téléphone de l'utilisateur ; un système de vérification du dispositif établit un rapport spatial entre le téléphone de l'utilisateur et le terminal multimédia ; un système de détection détecte l'état d'activation du terminal multimédia ; un système d'ouverture ouvre un contenu multimédia fourni sur le terminal multimédia au moment de la réception d'un appel téléphonique sur le téléphone de l'utilisateur ; un système de détermination détermine le comportement d'utilisateur pour savoir si lors de la fourniture du contenu multimédia, un appel entrant sur le téléphone est accepté ou refusé par l'utilisateur ; un système de combinaison combine le contenu multimédia et le comportement d'utilisateur en matière d'acceptation ou de refus de l'appel téléphonique entrant en un fichier d'événements ; le fichier d'événements est sauvegardé dans un système de mémorisation afin de créer un profil d'utilisateur.

10. Procédé selon la revendication 8 ou 9, **caractérisé en ce qu'**un système de détermination détermine le comportement d'utilisateur pour savoir si lorsque le contenu multimédia est fourni un appel reçu sur le téléphone est accepté ou refusé, qu'un système de combinaison combine le contenu multimédia et le comportement d'utilisateur en matière d'acceptation ou de refus de l'appel téléphonique entrant en un fichier d'événements, et que le fichier d'événements est sauvegardé dans le système de mémorisation afin de mettre à jour le profil d'utilisateur.

11. Procédé selon l'une quelconque des revendications 8 à 10, **caractérisé en ce que** le système servant à ouvrir un contenu multimédia fourni sur le terminal multimédia analyse un guide de programmes électronique transmis au terminal multimédia et/ou détecte un canal, par l'intermédiaire duquel le contenu multimédia est représenté sur le terminal multimédia.

12. Procédé selon l'une quelconque des revendications 8 à 11, **caractérisé en ce que**
le système servant à ouvrir un contenu multimédia fourni sur le terminal multimédia analyse le contenu multimédia en ce qui concerne les données audio et/ou données vidéo et/ou données de texte.

13. Procédé selon l'une quelconque des revendications 8 à 12, **caractérisé en ce que**
le fichier d'événements est généré par la combinaison du contenu multimédia, du comportement d'utilisateur en matière d'acceptation ou de refus de l'appel téléphonique entrant et du numéro de téléphone du téléphone appelant.

14. Procédé selon la revendication 8,
**caractérisé en ce que**, quand il est déterminé qu'il s'agit, suite à la comparaison, d'un appel souhaité ou non souhaité, quand l'appel est refusé, un message concernant l'appel refusé est envoyé au téléphone de l'appelant et/ou au téléphone de l'utilisateur, et/ou que le système servant à déterminer s'il s'agit, suite à la comparaison, d'un appel souhaité ou non souhaité, bloque, redirige ou reporte un appel entrant identifié comme ayant été refusé, ou que le dispositif présente un système de mémorisation comprenant des numéros de téléphone d'appelants favoris, lequel coopère avec le système servant à déterminer s'il s'agit, suite à la comparaison, d'un appel souhaité ou non souhaité, qu'en présence d'un appel entrant, le numéro de téléphone du téléphone appelant est comparé à des numéros de téléphone d'appelants favoris, et que dans le cas de la détermination d'une correspondance, l'appel est transféré au téléphone de l'utilisateur indépendamment des contenus multimédia.
